Europäisches Patentamt

European Patent Office

Office européen des brevets

(19)

(11) Numéro de publication : **0 069 628**
**B1**

(12)

# FASCICULE DE BREVET EUROPÉEN

(45) Date de publication du fascicule du brevet :
21.01.87

(51) Int. Cl.⁴ : **G 01 N 22/00**

(21) Numéro de dépôt : **82401152.2**

(22) Date de dépôt : **23.06.82**

(54) **Procédé et dispositif d'imagerie rapide en microonde.**

(30) Priorité : **02.07.81 FR 8113005**

(43) Date de publication de la demande :
**12.01.83 Bulletin 83/02**

(45) Mention de la délivrance du brevet :
**21.01.87 Bulletin 87/04**

(84) Etats contractants désignés :
**DE GB NL**

(56) Documents cités :
**US-A- 2 562 277**
**US-A- 3 708 796**
**MEDICAL PHYSICS, vol. 7, no. 1, janvier/février 1980, pages 1-7, Am. Assoc. Phys. Med., New York, USA J.H. JACOBI et al.: "Microwave time delay spectros-copic imagery of isolated canine kidney"**

(73) Titulaire : **Etablissement Public dit: CENTRE NATIO-NAL DE LA RECHERCHE SCIENTIFIQUE (CNRS)**
**15, Quai Anatole France**
**F-75700 Paris (FR)**

**THOMSON-CSF RADANT**
**Avenue de l'Atlantique Orsay (Essonne) B.P. 39**
**F-91942 Les Ulis Cedex (FR)**

(72) Inventeur : **Bolomey, Jean-Charles**
**31, rue Jean-Louis Sinet**
**F-92330 Sceaux (FR)**
Inventeur : **Michel, Yves**
**2, allée Marcel Cerdan**
**F-91300 Massy (FR)**

(74) Mandataire : **Lerner, François**
**5, rue Jules Lefebvre**
**F-75009 Paris (FR)**

EP 0 069 628 B1

## Description

La présente invention a pour objet un procédé et un dispositif d'imagerie rapide en microonde.

Des travaux récents se sont orientés vers l'obtention d'images d'objets illuminés par des ondes hyperfréquence. Des approches ont notamment été faites dans le domaine biomédical. Si l'on soumet un organe à un rayonnement hyperfréquence, il est possible d'en obtenir une « image » si l'on déplace derrière l'organe à scruter une sonde qui analyse l'onde reçue, transmise ou « diffractée » par l'organe.

Le procédé n'a actuellement pas pu déboucher sur des applications effectives et pratiques, et cela pour les difficultés suivantes.

1. Les énergies mesurées ponctuellement par la sonde que l'on déplace derrière l'objet sont extrêmement faibles, ce qui conduit à une mauvaise qualité de l'image compte tenu du niveau de « bruit » important.

2. Si l'on veut obtenir une image de définition relativement satisfaisante, il faut effectuer un très grand nombre de mesures ponctuelles. Outre que ceci entraîne la difficulté ci-dessus mentionnée en 1., cela entraîne également une durée de mesure beaucoup trop grande pouvant dépasser largement une heure, ce qui pratiquement n'est pas réalisable et présente d'autre part des contre-indications médicales.

3. Si l'on tente de résoudre les difficultés susmentionnées en multipliant le nombre de sondes de mesure, la conception de l'appareil devient rapidement très coûteuse et soulève de nombreux problèmes techniques.

L'invention propose un procédé et un dispositif qui permettent de résoudre les difficultés susmentionnées et de fournir simultanément de bonnes images microonde d'objets, l'invention trouvant son application tout particulièrement dans le domaine biomédical et pouvant être appliquée à l'industrie.

D'après le document « Medical Physics » volume 7 1980, n° 1, pages 1 à 7, qui divulgue toutes les caractéristiques techniques contenues dans les préambules des revendications 1 et 5, on connaît déjà un dispositif d'imagerie en microondes, utilisant une antenne d'émission hyperfréquence et un bloc collecteur recevant les signaux émis par l'antenne, l'espace entre le bloc et l'antenne permettant d'y placer le corps à scruter. Cependant ce document n'enseigne aucun moyen rapide et commode permettant de construire l'image.

D'après le brevet US-A-2 562 277, on connaît, d'autre part, l'usage d'un empilage de guides d'onde pour focaliser un faisceau d'onde hyperfréquence émis par une antenne. Les parois de quelques-uns de ces guides d'onde sont espacées d'un pas inférieur à la longueur d'onde utilisée.

L'invention, quant à elle, préconise un dispositif d'imagerie rapide en microonde utilisant des ondes hyperfréquence émises par une antenne en direction d'un corps à scruter du type comprenant :

une antenne d'émission hyperfréquence,

un bloc collecteur situé à une certaine distance de l'antenne, collectant les ondes reçues de l'antenne, l'espace compris entre l'antenne et ledit bloc permettant d'y placer le corps à scruter,

et des moyens de recueil des signaux,

ledit dispositif étant caractérisé en ce que :

ledit bloc comprend :

un panneau constitué de fils continus et de fils chargés de diodes disposés parallèlement et en alternance les uns à la suite des autres, parallèlement à la composante électrique de l'onde émise que l'on veut mesurer, lesdits fils étant écartés d'une distance inférieure à la longueur d'onde utilisée, ledit panneau comportant des moyens permettant de polariser en inverse tous les fils diodes sauf l'un d'eux séquentiellement variable en position,

un empilage de guides d'onde dont les ouvertures sont rectangulaires et présentent un petit côté parallèle aux fils et un grand côté orthogonal à ces fils, lesdits guides d'onde formant lentilles de convergence placées derrière ledit panneau, le petit côté desdites ouvertures étant inférieur à la longueur d'onde utilisée,

et lesdits moyens sont prévus pour recueillir séparément au niveau de chaque guide d'onde les signaux reçus.

L'invention se rapporte aussi à un procédé d'utilisation d'un dispositif du type dans lequel :

on utilise un faisceau d'onde hyperfréquence émis par une antenne,

on place devant cette antenne un corps à scruter,

et on recueille par balayage des signaux transmis ayant traversé le corps à scruter, ledit procédé étant caractérisé en ce que

on place derrière le corps à scruter un panneau, un empilage de guides d'onde et des moyens de recueil des signaux, conformément au dispositif sus-mentionné, et

on effectue le balayage du panneau en polarisant en direct un seul fil diode et en recueillant ensuite séparément et successivement dans chaque guide d'onde le signal d'image correspondant au tronçon dudit fil polarisé à cet instant situé en regard, puis en recommençant l'opération avec un nouveau fil diode jusqu'à utilisation de tous les fils diodes dudit panneau.

L'invention et sa mise en œuvre apparaîtront plus clairement à l'aide de la description qui va suivre faite en référence aux dessins annexés dans lesquels :

la figure 1 est une vue schématique du principe général d'imagerie microonde connu selon l'art antérieur,

la figure 2 est un schéma montrant plus précisément comment est construite, selon l'invention, l'image microonde d'un organe,

la figure 3 montre schématiquement en vue perspective et éclatée comment peut être réalisé un bloc collecteur conformément à l'invention,

la figure 4 montre à plus petite échelle et schématiquement comment est utilisé le bloc collecteur entrant dans le dispositif d'imagerie de l'invention.

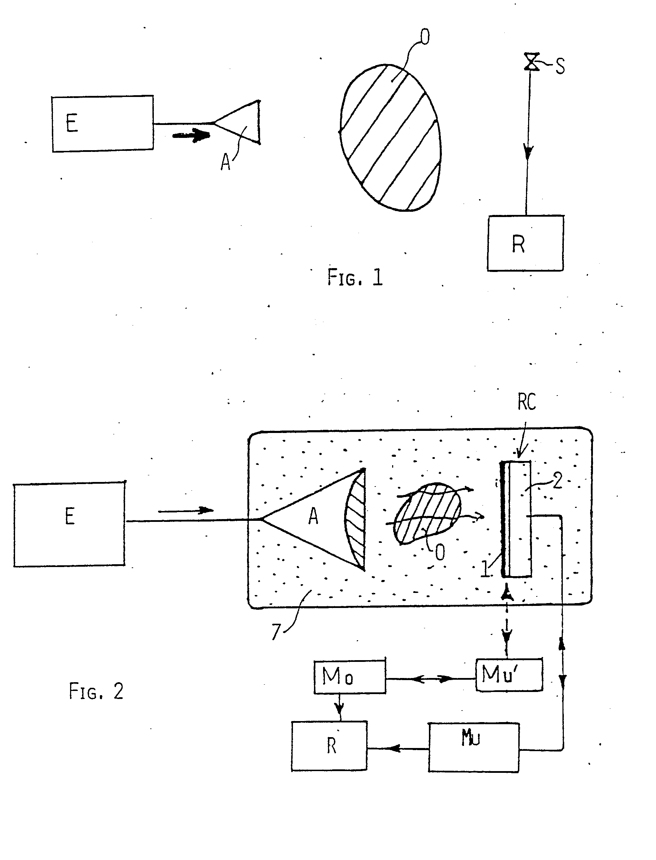

On se reportera tout d'abord à la figure 1 dans laquelle on a illustré le principe général que divers travaux ont tenté de mettre en œuvre selon l'art antérieur.

Une antenne A hyperfréquence émet à partir d'un émetteur E en direction d'un organe O que l'on veut scruter. Derrière l'organe O, on déplace une sonde S qui est reliée à un récepteur R.

Lorsqu'on procède de la sorte, la mesure est beaucoup trop lente, nécessitant plusieurs heures.

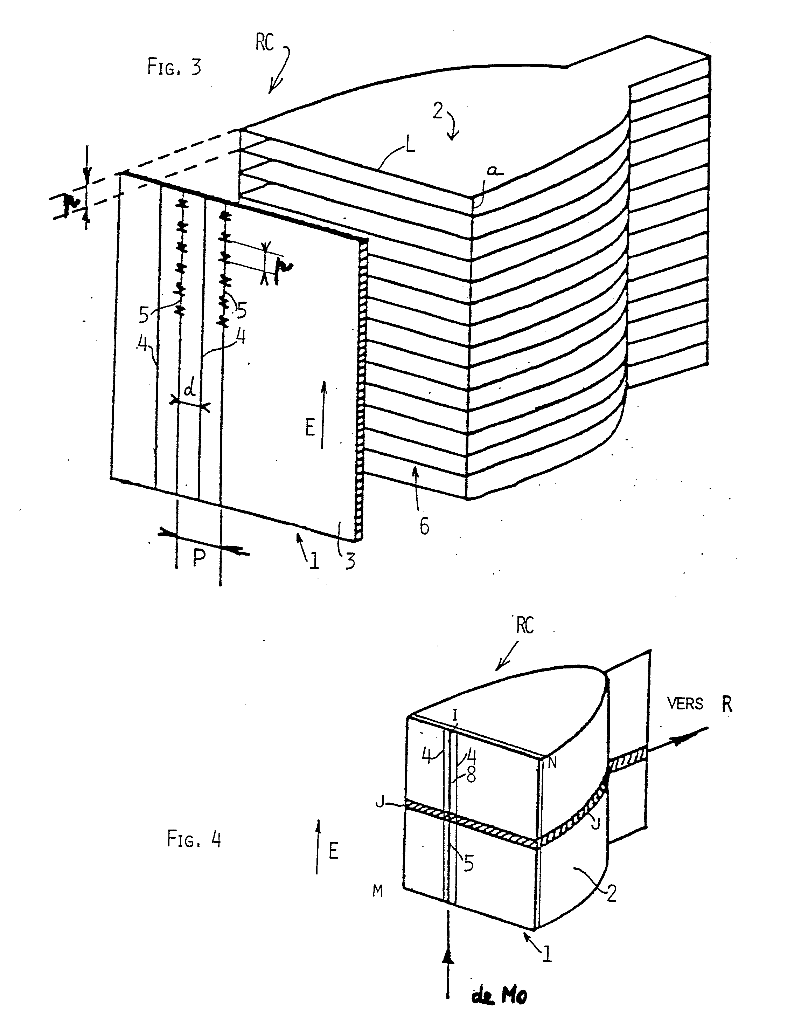

On se reportera maintenant à la figure 2 décrivant le principe de mise en œuvre de l'invention.

Le corps O à scruter est placé devant une antenne A alimentée par son émetteur E. Des ondes qui traversent l'organe O tombent sur un bloc collecteur RC dont l'organisation et le fonctionnement seront décrits plus loin en faisant référence aux figures 3 et 4.

On se reportera maintenant à la figure 3 dans laquelle on montre une réalisation du bloc collecteur RC. Ce bloc est essentiellement composé de deux parties, à savoir un panneau 1 formant « la rétine » du dispositif, et un empilage de guides d'ondes 2 formant collecteur.

Le panneau 1 est d'un type en soi connu, tel que décrit au brevet français FR-A-2 063 967. Ce panneau comprend, tendus sur une plaque diélectrique support 3 parallèlement à la composante du vecteur champ électrique $\vec{E}$ utilisée pour la mesure, un réseau de fils électriques continus 4 ou chargés de diodes 5. Pour ne pas surcharger la figure 3, et comme il s'agit en outre d'un panneau connu, on n'a représenté que deux fils continus 4 et deux fils-diodes 5 dont on n'a montré que quelques diodes. Les fils-diodes peuvent être alimentés comme décrit au brevet susmentionné de façon que toutes les diodes d'un fil soient passantes ou au contraire soient bloquées. Si l'on respecte des espacements convenables d et P entre fils adjacents successifs continus et fils-diodes, et si l'on respecte un certain espacement p des diodes sur les fils, les ondes reçues sur ce panneau le traversent sans perte ni déformation si les diodes sont bloquées (ou polarisées en inverse) ou réfléchissent l'onde reçue si les diodes sont passantes (ou polarisées en direct). Les grandeurs des valeurs P, p et d sont fonction essentiellement de la longueur d'onde d'émission, des caractéristiques de construction du panneau et des capacités des diodes. Par exemple, si l'on travaille à une fréquence de 3 GHz, ce qui correspond dans l'eau à une longueur d'onde d'environ 11 millimètres, des résultats satisfaisants sont obtenus en choisissant p = 2,5 mm (soit sensiblement $\lambda/4$), p = 2d = 5 mm (soit sensiblement $\lambda/2$) avec des diodes de type PIN ayant des capacités de l'ordre de 0,4 pF.

Derrière le panneau 1, on dispose un empilage de guides d'ondes 2 dont le petit côté a est parallèle aux fils 4, 5 et au vecteur $\vec{E}$, et dont le grand côté L est orthogonal auxdits fils 4, 5. En fonctionnement, le panneau 1 est plaqué contre la face d'entrée 6 de l'empilage 2 formant collecteur. Le côté a de chaque guide est avantageusement égal au pas p d'espacement des diodes, soit dans l'exemple ci-dessus mentionné a = 2,5 mm.

Le profil de chaque guide d'ondes est déterminé pour obtenir en régime d'émission une loi d'illumination donnée dans leur ouverture. Un profil exponentiel, par exemple, permet d'obtenir une loi d'illumination uniforme tant en amplitude qu'en déphasage, simulant un effet de lentille. Les guides sont adaptés en fonction du milieu de rayonnement 7 (voir Figure 2) qui sera habituellement de l'eau si les applications sont du domaine biomédical. L'adaptation pourra se faire en introduisant dans l'ouverture du guide une lame diélectrique d'épaisseur convenable.

Le dispositif sera utilisé de la façon suivante.

On polarise en inverse tous les fils-diodes sauf l'un d'eux. On isole ainsi, comme schématisé à la figure 4, une tranche du panneau 1 parallèle au vecteur champ électrique $\vec{E}$ formant une fenêtre 8 d'opacité entre les deux fils continus 4 qui entourent le seul fil-diode 5 polarisé en direct. Le collecteur 2 perçoit donc au niveau de chaque guide d'onde dont il est constitué une modification du signal correspondant au champ dans cette fenêtre. Chaque guide peut être relié à un récepteur séparé, ce qui permet d'analyser les caractéristiques du signal correspondant à chaque petit secteur rectangulaire d'intersection de la fenêtre 8 de rang I et du guide d'onde de rang J. En variante, comme illustré à la figure 2, un seul récepteur R peut être prévu pour la réception de tous les signaux provenant des guides d'onde empilés, un multiplexeur Mu étant interposé et assurant la lecture successive des signaux dans chaque guide de l'empilage (1-M).

Pour améliorer la lecture du signal, la commutation directe-inverse du fil-diode 5 de la fenêtre 8 « opaque » est modulée par un modulateur Mo. Le multiplexeur Mu' assure l'adressage successif des diverses fenêtres 8 de la première à la dernière (1-n).

Dans une réalisation, on a utilisé un empilage de trente-deux guides d'onde et une juxtaposition de trente-deux fenêtres telles que 8, permettant ainsi de créer une image constituée de mille vingt-quatre points. Si l'on utilise un multiplexeur tel que Mu associé au récepteur R, on peut obtenir une image dans un temps voisin de une seconde. Evidemment, si l'on utilise trente-deux récepteurs, à savoir un pour chaque guide, l'image peut être obtenue en moins d'un trentième de seconde.

## Revendications

1. Dispositif d'imagerie rapide en micro-onde utilisant des ondes hyperfréquence émises par une antenne (A) en direction d'un corps (O) à scruter du type comprenant :

une antenne d'émission hyperfréquence (A),

un bloc collecteur (RC) situé à une certaine distance de l'antenne, collectant les ondes reçues de l'antenne, l'espace compris entre l'antenne et ledit bloc permettant d'y placer le corps (O) à scruter,

et des moyens de recueil (R) des signaux, ledit dispositif étant caractérisé en ce que :

ledit bloc (RC) comprend :

un panneau (1) constitué de fils continus (4) et de fils (5) chargés de diodes disposés parallèlement et en alternance les uns à la suite des autres, parallèlement à la composante électrique ($\vec{E}$) de l'onde émise que l'on veut mesurer, lesdits fils (4, 5) étant écartés d'une distance inférieure à la longueur d'onde utilisée, ledit panneau comportant des moyens permettant de polariser en inverse tous les fils diodes (5) sauf l'un d'eux (I) séquentiellement variable en position,

un empilage de guides d'onde dont les ouvertures sont rectangulaires (2) et présentent un petit côté (a) parallèle aux fils (4, 5) et un grand côté (L) orthogonal à ces fils (4, 5), lesdits guides d'onde formant lentilles de convergence placées derrière ledit panneau (1), le petit côté (a) desdites ouvertures étant inférieur à la longueur d'onde utilisée,

et lesdits moyens (R) sont prévus pour recueillir séparément au niveau de chaque guide d'onde (2) les signaux reçus.

2. Dispositif selon la revendication 1, caractérisé en ce que les fils diodes (5) sont alimentés électriquement à travers un modulateur (Mo) par l'intermédiaire d'un multiplexeur (Mu').

3. Dispositif selon la revendication 1 ou la revendication 2, caractérisé en ce que la distance (P) comprise entre deux fils continus (4) ou deux fils diodes (5) successifs est voisine de la demi-longueur d'onde.

4. Dispositif selon l'une des revendications 1 à 3, caractérisé en ce que la distance (p) entre diodes portées par un même fil diode (5) est voisine du quart de la longueur d'onde.

5. Procédé d'utilisation d'un dispositif selon l'une des revendications 1 à 4, et n'étant pas destiné au diagnostic concernant le corps humain ou animal, du type dans lequel :

on utilise un faisceau d'onde hyperfréquence émis par une antenne (A),

on place devant cette antenne un corps (O) à scruter,

et on recueille par balayage des signaux transmis ayant traversé le corps à scruter, caractérisé en ce que :

on place derrière le corps (O) à scruter un panneau (1), un empilage de guides d'onde (2) et des moyens (R) de recueil des signaux, constitués comme indiqué à l'une des revendications 1 à 4, et

on effectue le balayage du panneau (1) en polarisant en direct un seul fil diode (5) et en recueillant ensuite séparément et successivement dans chaque guide d'onde (1-M) le signal d'image correspondant au tronçon dudit fil polarisé à cet instant situé en regard, puis en recommençant l'opération avec un nouveau fil diode (5) jusqu'à utilisation de tous les fils diodes (1-M) dudit panneau.

6. Procédé d'utilisation d'un dispositif selon la revendication 5, caractérisé en ce qu'on baigne l'antenne (A), le corps (O) à scruter et le bloc collecteur images (RC) dans un même milieu d'ambiance (7) ayant un coefficient diélectrique aussi proche que possible de celui dudit corps (O) à scruter.

## Claims

1. Rapid microwave imagery apparatus employing hyperfrequency waves emitted by an antenna (A) in the direction of a body (O) which is to be scrutinised, of the type comprising :

a hyperfrequency emission antenna (A),

a collector assembly (RC) situated at a certain distance from the antenna, picking up the waves received from the antenna, the space between the antenna and the said assembly making it possible to place therein the body (O) which is to be scrutinised,

and signal collecting means (R),

the said apparatus being characterised in that :

the said assembly (RC) comprises :

a panel (1) consisting of continuous wires (4) and diode charged wires (5) disposed parallel with one another and in an alternating relationship, parallel with the electrical component (E) of the wave emitted and which it is desired to measure, the said wires (4, 5) being spaced apart by a distance less than the wave length used, the said panel comprising means for inverse polarisation of all the diode wires (5) except for one of them (I) which is sequentially variable in position,

a stack of wave guides having rectangular apertures (2) and exhibiting a small side (a) parallel with the wires (4, 5) and a large side (L) at a right-angle to these wires (4, 5), the said wave guides forming converging lenses placed behind the said panel (1), the small side (a) of the said apertures being smaller than the wave length used,

and the said means (R) are provided in order separately to pick up the signals received at the level of each wave guide (2).

2. Apparatus according to Claim 1, characterised in that the diode wires (5) are supplied electrically through a modulator (Mo) through a multiplexer (Mu').

3. Apparatus according to Claim 1 or 2, characterised in that the distance (P) between two continuous wires (4) or two successive diode wires (5) is close to half the wave length.

4. Apparatus according to one of Claims 1 to 3, characterised in that the distance (p) between diodes carried on one and the same diode wire (5) is close to one-quarter of the wave length.

5. Method of using an apparatus according to one of Claims 1 to 4 and not being intended for diagnosis in respect of the human or animal body, of the type wherein :

a hyperfrequency wave beam emitted by an antenna (A) is used,

a body (O) to be scrutinised is placed in front of this antenna,

and by scanning, the signals transmitted are picked up after they have passed through the body to be scrutinised, characterised in that :

behind the body (O) to be scrutinised, there is placed a panel (1), a stack of wave guides (2) and signal connecting means (R), constituted as indicated in one of Claims 1 to 4, and

the panel (1) is scanned by directly polarising a single diode wire (5) and then separately and successively gathering from each wave guide (1-M) the image signal corresponding to the portion of the said wire polarised at this moment and situated opposite it, then recommencing the operation with a new diode wire (5) until all the diode wires (1-M) of the said panel have been used.

6. Method of using an apparatus according to Claim 5, characterised in that the antenna (A), the body (O) to be scrutinised and the image collecting assembly (RC) are plunged into one and the same environmental medium (7) which has a dielectric coefficient as close as possible to that of the body (O) to be scrutinised.

**Patentansprüche**

1. Vorrichtung zur schnellen Bilderzeugung mittels Mikrowellen unter Verwendung von Ultrahochfrequenzwellen, die von einer Antenne (A) in Richtung eines eingehend zu prüfenden Körpers (O) ausgesendet werden, mit :

einer Ultrahochfrequenzemissionsantenne (A),

einem Kollektorblock (RC), der in einem gewissen Abstand von der Antenne angeordnet ist und die von der Antenne empfangenen Wellen abfängt, wobei der Raum zwischen der Antenne und dem Block die Möglichkeit vorgibt, den zu prüfenden Körper (O) dort anzuordnen,

und Mitteln (R) zur Signalerfassung, wobei die Vorrichtung dadurch gekennzeichnet ist, daß :

der Block (RC) aufweist :

ein Feld (1), das aus kontinuierlichen Drähten (4) und mit Dioden beladenen Drähten (5) aufgebaut ist, die parallel und in Wechselfolge hintereinander angeordnet sind, parallel zur elektrischen Komponente (E) der emitierten Welle, die man messen will, wobei die Drähte (4, 5) um einen Abstand entfernt sind, der kleiner als die Länge der verwendeten Welle ist, wobei das Feld Mittel aufweist, welche gestatten, alle Diodendrähte (5) außer einem von ihnen (I) nacheinander in Stellung veränderbar umgekehrt zu polarisieren,

eine Blechung von Wellenführungen (2), deren Öffnungen rechteckig sind und eine kleine Seite (a) haben parallel zu den Drähten (4, 5) und eine große Seite (L) haben senkrecht zu diesen Drähten (4, 5) wobei die Wellenführungen Konvergenzlinsen bilden, die hinter dem Feld (1) angeordnet sind, wobei die kleine Seite (a) dieser Öffnungen kleiner als die Länge der benutzten Welle ist,

und die Mittel (R) vorgesehen sind zum einzelnen Erfassen der empfangenen Signale an jeder Wellenführung (2).

2. Vorrichtung nach Anspruch 1, dadurch gekennzeichnet, daß die Diodendrähte (5) elektrisch über einen Modulator (Mo) mittels eines Multiplexers (Mu') versorgt sind.

3. Vorrichtung nach Anspruch 1 oder Anspruch 2, dadurch gekennzeichnet, daß der Abstand (P) zwischen zwei kontinuierlichen Drähten (4) oder zwei nacheinander folgenden Diodendrähten (5) nahe der halben Wellenlänge ist.

4. Vorrichtung nach einem der Ansprüche 1 bis 3, dadurch gekennzeichnet, daß der Abstand (p) zwischen von einem und demselben Diodendraht (5) getragenen Dioden nahe einer viertel Wellenlänge ist.

5. Verfahren zur Verwendung einer Vorrichtung nach einem der Ansprüche 1 bis 4, ohne für die die menschlichen und tierischen Körper betreffende Diagnostik bestimmt zu sein, wobei man :

ein Bündel Ultrahochfrequenzwellen verwendet, die von einer Antenne (A) emitiert werden,

gegenüber dieser Antenne einen zu prüfenden Körper (O) anordnet und

durch Bildabtastung ausgesendete Signale, welche den zu prüfenden Körper durchlaufen haben, erfaßt, dadurch gekennzeichnet, daß :

man hinter den zu prüfenden Körper (O) ein Feld (1), eine Blechung von Wellenführungen (2) und Mittel (R) anordnet zum Erfassen der Signale, nach einem der Ansprüche 1 bis 4 und

man die Bildabtastung des Feldes (1) durchführt, indem man direkt einen einzigen Diodendraht (5) polarisiert und dann einzeln und nacheinander in jeder Wellenführung (1-M) das Bildsignal erfaßt, welches der Strecke des polarisierten Drahtes, der in diesem Augenblick in Betracht steht, entspricht, und indem man dann den Betrieb mit einem weiteren Diodendraht (5) wiederholt, bis zur Verwertung aller Diodendrähte (1-M) des Feldes.

6. Verfahren zur Verwendung einer Vorrichtung nach Anspruch 5, dadurch gekennzeichnet, daß man die Antenne (A), den zu prüfenden Körper (O) und den Bildsammelblock (RC) in ein und demselben Umgebungsmilieu (7) bespült, welches einen Dielektrizitätskoeffizienten hat, der auch dem des zu prüfenden Körpers (O) so nahe wie möglich ist.

Fig. 1

Fig. 2

**0 069 628**

Fig. 3

Fig. 4

2